(19) Europäisches Patentamt

European Patent Office

Office européen des brevets

(11) Publication number: **0 327 288**
**A2**

## (12) EUROPEAN PATENT APPLICATION

(21) Application number: 89300884.7

(22) Date of filing: 30.01.89

(51) Int. Cl.⁴: **A23D 3/00**

(30) Priority: 04.02.88 AU 6577/88

(43) Date of publication of application:
09.08.89 Bulletin 89/32

(84) Designated Contracting States:
AT BE CH DE FR GB LI NL SE

(71) Applicant: GOODMAN FIELDER INDUSTRIES LIMITED
43 Curzon Street Tennyson
Brisbane Queensland, 4105(AU)

(72) Inventor: Forrest, Bradley A.
c/o 43 Curzon Street Tennyson
Brisbane Queensland, 4105(AU)
Inventor: Harvey, Gary C.
c/o 43 Curzon Street Tennyson
Brisbane Queensland, 4105(AU)

(74) Representative: Allard, Susan Joyce et al
BOULT, WADE & TENNANT 27 Furnival Street
London EC4A 1PQ(GB)

(54) Low fat spread.

(57) A low fat spread is disclosed that comprises 25-70% w/w of a continuous plastic fat phase, a water-in-oil promoting emulsifier and a dispersed aqueous phase which includes a non-gelling starch hydrolysate of dextrose equivalent 2-28 in an amount of not more than 15% w/w of the spread.

EP 0 327 288 A2

## LOW FAT SPREAD

This invention relates to plastic edible emulsions of the water-in-oil type, particularly emulsions containing substantially less fat than butter or margarine, such emulsions being commonly referred to as low fat spreads.

Many low fat spreads containing a continuous plastic fat phase and a dispersed aqueous phase are organoleptically inferior to butter or margarine.

In the prior art, proteins have been used to furnish improved spread products. However, it is well known in the art that such proteinaceous spreads have the disadvantage of low production rates allied with difficulty in maintaining a water-in-oil emulsion. Proteinaceous spreads also have the disadvantage of the sensitivity of proteins to other ingredients in the spread, for example acidulants, which may lead to difficulty in obtaining a desirable product. Yet another disadvantage of proteinaceous spreads is their low resilience to stresses, particularly those involved in transportation, as well as temperature stresses.

In seeking to meet these disadvantages applicants have found that by judicious use of non-gelling starch hydrolysates, spreads of improved flavour, texture, mouthfeel and appearance can be obtained.

Moreover, the inventive low fat spread has been found to have a further advantage in that it is amenable to production rates up to twice as fast as prior art proteinaceous spreads.

Accordingly, the present invention consists in a low fat spread comprising 25 to 70% W/W, preferably 32 to 70% W/W, of a continuous plastic fat phase, 75 to 30% W/W, preferably 68 to 70% W/W, of a dispersed aqueous phase and a water-in-oil promoting emulsifier, said aqueous phase including at least one non-gelling starch hydrolysate (NGSH) having a dextrose equivalent(D.E.) value of from 2 to 28 in an amount of no more than 15% W/W of the spread.

The present inventors are aware of the disclosure of the use of maltodextrins in some reduced fat compositions.

Thus, in Australian patent application 69612/87, there is disclosed the use of gelling maltodextrins in the aqueous phase of a spread containing less than 35% fat. The inventors state that it is an essential aspect of this invention that the composition constituting the aqueous phase is a gel-forming composition. By gel forming it is meant that it must contain one or more gelling agents in a concentration at or above the critical concentration of that aqueous phase composition. It is further disclosed that a non-gelling maltodextrin may be used as a thickener in conjunction with one or more gelling agents.

Thus it is evident from this disclosure that the inventors considered the use of non-gelling maltodextrin only as an adjunctive thickener. There is no hint or suggestion that a non-gelling maltodextrin may be used in the absence of a gelling agent to advantage.

In Australian patent application 62493/86 there is disclosed the use of maltodextrins as humectants in edible water-in-oil emulsions in which the fat phase comprises 15-70% of the emulsion. It is noted, however, that this application discloses only the use of a humectant in combination with fat having a particular fat solids profile. There is no disclosure of a water-in-oil emulsion of this invention having the requisite physical or organoleptic characteristics of a low fat spread.

In U.S. 4536408 (Morehouse et al) there is disclosed a low fat spread which includes, inter alia, a non-gelled starch hydrolysate having a D.E. of about 4 and not more than 25 in an amount of from 15 to 35% by weight of the spread. It is stated that no emulsifiers are required to achieve a stable water-in-oil emulsion product.

It is noted, however, that the inventors show no recognition of the advantage to be gained through the use of substantially lower concentrations of non-gelling maltodextrin, in the presence of an emulsifier, where an improved organoleptic profile for low fat spread is obtained together with a doubly increased rate of production.

In the instant invention, the D.E. of the NGSH is important, at least for the reason that at too high a value, undesirable sweet flavours appear in the product, whilst at too low a value, cereal taints may occur.

In some embodiments of the invention, two NGSH's may be used, one having a relatively high D.E. and the other having a relatively low D.E. It is believed that the combination of the two NGSH'S provides a flavour benefit in the finished product.

The NGSH is included in the inventive spreads in an amount of no more than 15% w/w. Most preferably, the amount will be no more than 12% w/w. Particularly preferred is an amount of NGSH of not more than 8% w/w.

In a preferred embodiment of the invention, the plastic fat phase comprises polyunsaturated fatty acids amounting to at least 40% by weight of the total fatty acids, whilst simultaneously having at most 20% of saturated fatty acids by weight of the total fatty acids.

Typical of such fat blends are those obtained by mixing 25-40% of liquid oils (for example, soyabean, sunflower, cottonseed, palm and the like or blends thereof) hydrogenated with the aid of a catalyst, with 75-60% non-hydrogenated liquid oils (for example, soyabean, sunflower, safflower, rapeseed and the like) to achieve the desired P/S ratio and NMR solids characteristics. It is to be noted that one or more hydrogenated fractions differentiated by melting point, solids content, crystallization rate or the like may be used.

A preferred solids profile (determined using the I.U.P.A.C NMR method) is as follows:

| $N_{10}$ (10°C) | 10-35% |
|---|---|
| $N_{20}$ (20°C) | 5-18% |
| $N_{30}$ (30°C) | 0-12% |

However, other fat blends, for example, based on palm, coconut, cottonseed, lard, tallow, milk fat or the like, either hydrogenated or interesterified, including mixtures thereof, have been successfully used to provide the inventive low fat spread.

The emulsion should contain water-in-oil promoting emulsifiers preferably partial glycerides, especially partially unsaturated monoglycerides at levels of 0.01-1.0% by weight of the product. Lecithin and/or other emulsifiers may also be used to obtain the desired emulsion characteristics.

In order to produce spreads of good keeping qualities, it is necessary to adjust the pH of the aqueous phase within the range 4.0-7.0, preferably 4.8-5.8.

To further improve the keeping qualities of the product of the invention, it is advisable to include in the aqueous phase 0.1-0.2% (by weight of the total product) of a preserving agent such as sorbic acid and/or its sodium and potassium salts.

Dairy by-products such as skim milk, whey powder and the like as well as vegetable and animal protein by-products may be added in order to obtain desired flavour effects as is well known to those skilled in this art.

According to the preferred embodiment of the invention, the low fat spread of the invention containing non-gelling starch hydrolyzates in the aqueous phase is prepared as follows:-

To water at 40-50°C is added the non-gelling starch hydrolysate, salt, acidulant, preservative and other minor ingredients. It is advisable to pasteurise this aqueous phase prior to inclusion in the product. Alternatively, the liquid water-in-oil emulsion may be pasteurised prior to cooling and working.

To the molten fat at 40-50°C is added the emulsifying agent(s) and if desired, flavours and/or colours and/or vitamins.

The two phases are then proportioned into a vessel wherein emulsification is brought about by methods known to those skilled in the art. The temperature of the formed water-in-oil emulsion is preferably 40-50°C.

The mixture is then cooled and worked using scraped surface heat exchangers and the product of the invention is packed. Recycled material is remelted and transferred into the vessel for reprocessing.

The invention will now be illustrated by the following examples, in which all percentages are by weight of the low fat spread unless otherwise indicated.

EXAMPLE 1

Into an agitated vessel containing 564 kg of water at 45°C were added .

| Sodium chloride | 15.0 kg |
|---|---|
| Potassium sorbate | 2.0 kg |
| 5 D.E. Maltodextrin (Maltrin 050*) | 20.0 kg |
| Citric acid | 250.0 g |
| Water soluble flavouring | 50.0 g |

(*Maltrin is a trade mark of Grain Processing Corp., U.S.A.).

Into another agitated vessel containing 395 kg of molten polyunsaturated fat blend (having characteristics as defined herein) at 45°C were added -

| Distilled monoglyceride (Dimodan* PV) | 4.0 kg |
|---|---|
| Beta-carotene colouring | 50.0 g |
| Oil-soluble flavouring | 50.0 g |

(*Dimodan is a trade mark or Grindstedvaerket A/S, Denmark).

The water phase was carefully added to the agitated fat phase to produce a water-in-oil emulsion having a temperature of 45°C. Chilling of the emulsion so formed was achieved in a pilot plant by passing it through two tubes of an ammonia cooled scraped surface heat exchanger of the Votator type (Votator is a trade mark of Girdler Corporation, U.S.A.). Following this, the emulsion was worked in a variable speed crystallizer and then packed at approximately 15°C. The flow rate through the plant varied from 4.5 kg to 10.0 kg per minute between which limits satisfactory product was obtained.

EXAMPLE 2

A spread was made having the composition shown below:-

| Aqueous phase | % w/w |
|---|---|
| Water | 44.34 |
| 10 D.E. maltodextrin (Maltrin 100) | 15.00 |
| Sodium Chloride | 1.50 |
| Potassium sorbate | 0.20 |
| Citric acid | 0.025 |
| Sodium citrate | 0.075 |
| Skim milk powder | 0.05 |
| **Fat Phase** | |
| Polyunsaturated oil blend (as hereinbefore defined) | 38.40 |
| Myverol 1850* | 0.40 |
| Colouring | 0.005 |
| Oil soluble flavouring | 0.0065 |

* Trade mark of Eastman Kodak

* Trade mark of Eastman Kodak

This composition was processed as described in example 1 to produce a spread of good organoleptic quality.

EXAMPLE 3

A spread was made having the composition below:-

| Aqueous Phase | % w/w |
|---|---|
| Water | 49.44 |
| 17 D.E. maltodextrin (PHS 17)* | 10.00 |
| Salt | 1.50 |
| Potassium sorbate | 0.20 |
| Citric acid | 0.025 |
| Sodium citrate | 0.075 |

* obtained from Goodman Fielder Industries Ltd, Australia.

Fat Phase

| | |
|---|---|
| Polyunsaturated oil blend (as hereinbefore defined) | 38.55 |
| Dimodan LS | 0.25 |
| Colouring | 0.005 |
| Oil soluble flavour | 0.0065 |
| Lecithin | 0.05 |

This composition was processed as described in Example 1 to produce a spread of good organoleptic quality.


EXAMPLE 4

A spread was made having the following composition:

| Fat Phase | % w/w |
|---|---|
| Polyunsaturated oil blend (as hereinbefore defined) | 67.5 |
| Dimodan OT | 0.3 |
| Colouring | 0.004 |
| Oil soluble flavour | 0.008 |
| Aqueous Phase | |
| Water | 24.5 |
| Salt | 2.0 |
| 9 D.E. maltodextrin (Fieldose 9)* | 5.0 |
| Potassium Sorbate | 0.2 |
| Citric Acid | 0.01 |
| Sodium Citrate | 0.07 |
| Skim milk powder | 0.5 |

*Fieldose is a trade mark of Goodman Fielder Industries Ltd., Australia

The emulsion was prepared in similar fashion to example 1, with the exception that it was passed through two scraped surface heat exchangers of the Perfector ™ type followed by a variable speed crystallizer. The pack temperature was approximately 10°C, and the flow rate through the plant was varied between 1.0 and 2.0 kg/min, between which limits excellent product was obtained.


EXAMPLE 5

A spread was prepared having the composition shown below:


** Perfector  is a trade  mark  of Gerstenberg  and Agger,  Denmark.

| Aqueous Phase | % w/w |
|---|---|
| Water | 56.37 |
| Sodium Chloride | 3.00 |
| 28 DE maltodextrin (Fieldose 30) | 2.0 |
| Citric Acid | 0.02 |
| Potassium Sorbate | 0.20 |
| Fat phase | |
| Polyunsaturated Oil blend (as hereinbefore defined) | 38.00 |
| Dimodan OT | 0.20 |
| Soya lecithin | 0.20 |
| Colour | 0.004 |
| Flavour | 0.006 |

The emulsion was prepared in similar fashion to example 1, and processed as described in example 4 to yield an acceptable spread product.

EXAMPLE 6

A spread was prepared having the following composition:

| Aqueous phase | % w/w |
|---|---|
| Water | 48.77 |
| Sodium Chloride | 3.0 |
| Fieldose 9 | 12.0 |
| Fieldose 30 | 3.0 |
| Citric acid | 0.02 |
| Potassium Sorbate | 0.2 |
| Fat Phase | |
| Polyunsaturated oil blend (as hereinbefore defined) | 32.0 |
| Dimodan OT | 0.8 |
| Soya lecithin | 0.2 |
| Colour | 0.006 |
| Flavour | 0.006 |

The emulsion was prepared as described in example 1, and was then passed through two scraped surface heat exchangers of the Perfector type (in between which were two crystallising units) followed by a variable speed pin machine. The pack temperature was approximately 13°C, and the flow rate through the plant was 0.3kg/min. The spread produced was judged to be satisfactory.

Claims

1. A low fat spread comprising 25 to 70% w/w of a continuous plastic fat phase, 75 to 30 w/w of a dispersed aqueous phase and a water-in-oil promoting emulsifier, characterized in that the aqueous phase includes at least one non-gelling starch hydrolysate (NGSH) having a dextrose equivalent (D.E.) value of from 2 to 28 in an amount of no more than 15% w/w of the spread.

2. A spread as in claim 1 comprising 32 to 70% w/w of a continuous plastic fat phase and 68 to 30% w/w of a dispersed aqueous phase.

3. A spread as in claim 1 or claim 2, wherein the NGSH is in an amount of not more than 12%, preferably not more than 8%.

4. A spread as in any one of claims 1-3 wherein the solids profile of the fat is as follows:

| $N_{10}$ (10 °C) | 10-35% |
|---|---|
| $N_{20}$ (20 °C) | 5-18% |
| $N_{30}$ (30 °C) | 0-12%. |

5. A spread as in claim 4 wherein the plastic fat phase comprises polyunsaturated fatty acid residues amounting to at least 40% w/w of the total fatty acid residues, whilst simultaneously having at most 20% of saturated fatty acid residues by weight of the total fatty acid residues.

6. A spread as in any one of claims 1 to 5, wherein the emulsifier is a partial glyceride or lecithin.

7. A spread as in claim 6 wherein the partial glyceride is a partially unsaturated monoglyceride in a concentration of 0.01 to 1.0% w/w.

8. A spread as in any one of claims 1 to 7, wherein the pH of the aqueous phase is in the range of from 4.0 to 7.0, preferably 4.8 - 5.8.

9. A spread as in any one of claims 1 to 8 including two non-gelling starch hydrolysates.

10. A spread as in claim 9, wherein one non-gelling starch hydrolysate has a relatively low D.E. and the other has a relatively high D.E.